# EUROPEAN PATENT SPECIFICATION

(11) **EP 2 084 908 B1**
(45) Date of publication and mention of the grant of the patent: **07.07.2010**
(21) Application number: 07728311.7
(22) Date of filing: 19.04.2007
(51) Int. Cl.: H04N 7/24, G11B 27/00

(54) **ADAPTIVE INSERTION OF CONTENT IN STREAMING MEDIA**
ADAPTIVE EINFÜGUNG VON INHALT IN STREAMING-MEDIEN
INSERTION ADAPTATIVE DE CONTENU DANS UN FLUX MULTIMÉDIA

(30) Priority: 07.11.2006 US 557114
(43) Date of publication of application: 05.08.2009
(73) Proprietor: Sony Ericsson Mobile Communications AB, 221 88 Lund (SE)
(72) Inventor: KARLBERG, Johan, 222 29 Lund (SE)
(74) Representative: Aurell, Henrik
(86) International application number: PCT/EP2007/053852
(87) International publication number: WO 2008/055713

(56) References cited:
- EP-A- 1 246 417
- WO-A-2005/094067
- CA-A1- 2 303 522

## Description

### FIELD OF THE INVENTION

Implementations described herein relate generally to streaming media and, more particularly, to adaptive buffering of streaming media. More specifically, the invention as described by means of examples relates to methods and devices for processing of streaming media, in order to adaptively insert content in streaming media.

### BACKGROUND

Streaming media typically includes audio and video transmitted over a communications link, such as the Internet, in a streaming or continuous fashion. Unlike media data files, such as sound files or video files, that are played after they are downloaded, streaming media is played within a few seconds of requesting it, and the data is not stored permanently in the computer. If the streaming media is broadcast live, it is sometimes called "real-time media." However, technically, real-time means no delays, and there is a built-in delay in streaming media. The basic idea behind the concept of streaming media is that is annoying to listen to momentary blips in music or a conversation, or frozen or staggering frames in a video signal, and the only way to compensate for that over an erratic network, such as the Internet, is to get some of the audio data into the user device before starting playback. In streaming audio, both the client, i.e. the user device, and server cooperate for uninterrupted sound. The client side stores a few seconds of sound in a buffer before it starts sending it to the dedicated output device, such as a speaker or a display. Throughout the session, it continues to receive media data ahead of time. Therefore, in streaming media applications, streaming audio and/or video data may be played back without the data being completely downloaded first. Streaming media may, thus, be viewed or listened to in quasi "real-time" as the data is received. Streaming media may be user-controlled, e.g., on-demand, pay-per-view movies, etc., or server-controlled, e.g. webcasting.

There are several Internet-based streaming services including, for example, audio books, news and podcasts. Podcasting may include the distribution of real-time streaming audio and/or video data over the Internet for user viewing and/or listening. Podcasting typically involves a subscription feed of automatically delivered new audio and/or video content. Audio streaming of voice or music content may include the distribution of media containing voice or music over the Internet for user listening.

A problem related to streaming media is that sometimes the bandwidth of the communications link over which the streaming media is provided may be uneven and insufficient. Delivery of streaming media over a low bandwidth connection can lead to a poor user experience if the continuous stream is constantly interrupted because buffering is needed due to depletion of data in the buffer. This may be the case both for wired connections to a communications network such as the Internet, and over the air communication links via radio, such in a IEEE 802.11 WLAN connection or a connection over a mobile telephony network such as a WCDMA network, and the problem is typically more common in mobile applications where bandwidth generally is more restricted.

### SUMMARY OF THE INVENTION

A general object of the invention is therefore to provide a solution for processing streaming media signals such that the user experience is enhanced.

According to a first aspect, this object is fulfilled by means of a method as recited in the appended claims

In one embodiment the method may comprise the steps of:
analyzing remaining media data in the first buffer during playback of the first content, to identify a location to halt playback;
halting playback of the first content when the first buffer reaches the identified location in the first buffer.

In one embodiment the step of analyzing remaining media data in the first buffer is carried out when the first buffer is emptied to a predetermined level.

In one embodiment the predetermined level is a certain percentage of the storage capacity of the first buffer.

In one embodiment the step of analyzing remaining media data in the first buffer comprises the step of identifying a location in the first buffer that stores an inactive period.

In one embodiment the step of analyzing remaining media data in the first buffer comprises the step of identifying a halt flag in the media data.

In one embodiment the inactive period comprises a silent period in an audio portion of the streaming media data.

In one embodiment the silent period comprises a pause in speech contained in the audio portion.

In one embodiment the inactive period comprises a still period in a video portion of the streaming media data.

In one embodiment the certain percentage of the first buffer's capacity comprises 20%.

In one embodiment the step of receiving streaming media data comprises the steps of:
receiving media data representing the first content; and
receiving media data representing the second content, wherein the method further comprises the step of:
   storing the received data of the second content in the second buffer.

In one embodiment the step of receiving streaming media data comprises the steps of:
receiving media data representing the first content; and
receiving media data representing two or more additional sets of content, wherein the method further comprises the step of:
   storing the received data of the additional sets of content in separate buffers.

In one embodiment the method comprises the step of:
selecting the second content from a plurality of additional sets of content, for which sets of content media data is stored in separate buffers.

In one embodiment the method comprises the steps of:
detennining a suitable re-filling time period for the first buffer;
selecting the second content from a plurality of additional sets of content, for which sets of content media data is stored in separate buffers, based on the selected second content having a playback time exceeding the determined re-filling time period.

In one embodiment the step of determining a suitable re-filling time period comprises the steps of:
determining network bandwidth in a communication link over which the streaming media data is received;
determining bit rate for the first content;
determining the time period required to reach a predetermined level in the first buffer based on the determined bandwidth and the bit rate.

In one embodiment the step of receiving streaming media data comprises the steps of:
receiving media data representing the first content;
receiving media data representing the second content; and
receiving a header containing information on the at least the second content, wherein the method further comprises the step of:
   reading the received header, and
   storing the received data of the second content in the second buffer based on the information in the header.

In one embodiment the second content is selected based on which of said additional sets of content have been previously played while re-filling the first buffer.

In one embodiment the second content is selected based on a priority order between said additional sets of content.

In one embodiment the method comprises the steps of:
storing information on which of the additional sets of content have been played during re-filling of the first buffer;
transmitting a report of the stored information to a service provider.

In one embodiment the step of resuming playback of the first content is carried out when the second content has reached an end point.

In one embodiment the step of resuming playback of the first content is carried out when the first buffer has been re-filled to a predetermined level.

In one embodiment the predetermined level is a certain percentage of the storage capacity of the first buffer.

In one embodiment the certain percentage of the first buffer's capacity comprises 80%.

According to a second aspect, the object is fulfilled by means of a user device as recited in the appended claims.

In one embodiment the user device comprises:
a media player connected to the buffer, configured to provide media playback of extracted media data;
an output device connected to the media player, configured to provide user-perceivable media output.

In one embodiment the user device comprises:
a buffer analyzer, configured to analyze remaining media data in the first buffer, during playback of media from the first buffer, to identify a location to halt playback; wherein the buffer controller is configured to halt playback of content from the first buffer when the first buffer reaches the identified location.

In one embodiment the buffer controller is configured to analyze remaining media data in the first buffer when the first buffer is emptied to a predetermined level.

In one embodiment the predetermined level is a certain percentage of the storage capacity of the first buffer.

In one embodiment the buffer controller is configured to analyze remaining media data in the first buffer by identifying a location in the first buffer that stores an inactive period.

In one embodiment the buffer controller is configured to analyze remaining media data in the first buffer by identifying a halt flag in the media data.

In one embodiment the inactive period comprises a silent period in an audio portion of the streaming media data.

In one embodiment the silent period comprises a pause in speech contained in the audio portion.

In one embodiment the inactive period comprises a still period in a video portion of the streaming media data.

In one embodiment the certain percentage of the first buffer's capacity comprises 20%.

In one embodiment the user device comprises:
a plurality of separate buffers for storing media data representing additional sets of content, wherein the buffer controller is configured to select the second content from one of the plurality of buffers.

In one embodiment the buffer controller is configured to
determine a suitable re-filling time period for the first buffer;
select the second content from one of the plurality of separate buffers, based on the selected second content having a playback time exceeding the determined re-filling time period.

In one embodiment the buffer controller is configured to select the second content from one of the plurality of separate buffers, based on which of said additional sets of content have been previously played while re-filling the first buffer.

In one embodiment the buffer controller is configured to select the second content from one of the plurality of separate buffers, based on a priority order between said additional sets of content.

In one embodiment the user device comprises:
a signal transmitter;
a data memory;
a data recorder configured to store information in the data memory on which of the additional sets of content have been played during re-filling of the first buffer, and to transmit a report of the stored information to a content provider.

In one embodiment the buffer controller is configured to resume playback of content from the first buffer when the second content has reached an end point.

In one embodiment the buffer controller is configured to resume playback of content from the first buffer when the first buffer has been re-filled to a predetermined level.

In one embodiment the predetermined level is a certain percentage of the storage capacity of the first buffer.

In one embodiment the certain percentage of the first buffer's capacity comprises 80%.

In one embodiment the user device is configured to receive a data stream comprising:
a header, followed by the media data representing the second content, followed by the media data representing the first content; the user device comprising:
   a pre-buffer connected to the signal receiver, wherein the buffer controller is configured to read the header in the pre-buffer to retrieve information on the second content; and
   store the media data of the second content in the second buffer, and the media data of the first content in the first buffer, based on the information in the header.

According to a third aspect, the object is fulfilled by means of a streaming media data signal, comprising:
media data representing first content;
media data representing additional content;
a header comprising information on the first content and the additional content.

In one embodiment the header is transmitted before the media data of the additional content, and where the media data of the additional content is transmitted before the media data of the first content.

In one embodiment the header includes information on playback time for the additional content.

In one embodiment the header includes information on the size of the additional content.

In one embodiment the header includes information on a location of an end portion of the additional content in the stream.

### BRIEF DESCRIPTION OF THE DRAWINGS

The accompanying drawings, which are incorporated in and constitute a part of this specification, illustrate one or more embodiments of the invention and, together with the description, explain the invention. In the drawings,
Fig.1 illustrates an exemplary system in which aspects of the invention may be implemented;
Fig. 2 illustrates an exemplary system that includes a cellular network in which a user device configured in accordance with embodiments of the invention may be employed;
Fig. 3 illustrates an exemplary user device consistent with principles of the invention, and different means for receiving streaming media;
Fig. 4 illustrates an exemplary block diagram of a user device configured to operate in accordance with principles of the invention; and
Fig. 5 schematically illustrates a streaming data signal, and how it is received in a user device, in accordance with principles of the invention.

### DETAILED DESCRIPTION OF EMBODIMENTS

The following detailed description of the invention refers to the accompanying drawings. The same reference numbers in different drawings may identify the same or similar elements. Aspects of the invention may be implemented in methods and/or computer program products. Accordingly, the invention may be embodied in hardware and/or in software (including firmware, resident software, microcode, etc.). Furthermore, the invention may take the form of a computer program product on a computer-usable or computer-readable storage medium having computer-usable or computer-readable program code embodied in the medium for use by or in connection with an instruction execution system. The actual software code or specialized control hardware used to implement aspects consistent with principles of the invention is not limiting of the invention. Thus, the operation and behavior of the aspects were described without reference to the specific software code, it being understood that one of ordinary skill in the art would be able to design software and control hardware to implement the aspects based on the description herein.

Furthermore, certain portions of the invention may be implemented as "logic" that performs one or more functions. This logic may include hardware, such as an application specific integrated circuit or field programmable gate array, software, or a combination of hardware and software.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise. It should also be emphasized that the terms "comprises" and "comprising" when used in this specification is taken to specify the presence of stated features, integers, steps, components or groups but does not preclude the presence or addition of one or more other features, integers, steps, components or groups thereof.

Furthermore, different embodiments and aspects of the invention will be described herein with reference to a user device in which a streaming media data signal is received and processed for playback. In this context, the user device may be connected by wire to a source delivering the streaming media signal, or it may be wirelessly connected over the air, typically by means of a radio communications link. The user device may be a computer, stationary or portable, or it may be some other form of media presentation unit devices for reception and presentation of streaming media according to the aspects of the invention. However, the invention will mainly be described herein in the context of mobile communications, where the user device preferably is a portable electronic device configured to operate in a radio network. More specifically, in a preferred embodiment the user device is a mobile phone configured to operate in a radio network, preferably in a packet switched network service. Examples thereof include a 3GPP WCDMA network, or a GPRS GSM network. Furthermore, it should be noted that the invention as described with reference to the outlined embodiments relate to processing of a received streaming data signal in a user device before playback, but that it is not essential that the user device actually incorporates the means required for presentation of the content the streaming media signal represents. On the contrary, the user device may well be connected to another separate presentation device, such as one or more speakers and/or a separate display device, on which the media content is displayed.

Consistent with aspects of the invention, an adaptive buffering technique is provided that halts media playback and re-fills a first, or main, buffer with streaming media data when the first buffer has been depleted to a certain extent, and which switches to provide media data representing additional content from a second buffer, for playback during re-filling of the first buffer. Preferably, this is performed when it is appropriate from a media context point of view. For example, playback may be halted when there is a natural pause is speech contained in the media data regardless of how full or empty the buffer is. Consistent with aspects of the invention, the natural pause may be extended with an amount of time required to buffer additional streaming media data. Existing buffering techniques wait until the buffer is emptied of streaming data before re-filling the buffer. This re-filling of the buffer happens without any relation to the actual media that is being played, which means that the re-filling may occur, for example, in the middle of a sentence or even in the middle of a word. In contrast, re-filling the buffer at, for example, natural pauses in the media is likely to be less intrusive than completely re-filling the buffer when the buffer is emptied or has reached a predetermined level. Furthermore, by presenting additional content when playback of the first buffer is halted to be re-filled allows additional content or information to be presented. Typically, the time during which playback of the content of the first buffer needs to be halted in order to provide adequate re-filling is fairly short, maybe in the order of just a few seconds. Therefore, the additional content may be very brief, and a suitable type of content for this purpose is a commercial advertisement.

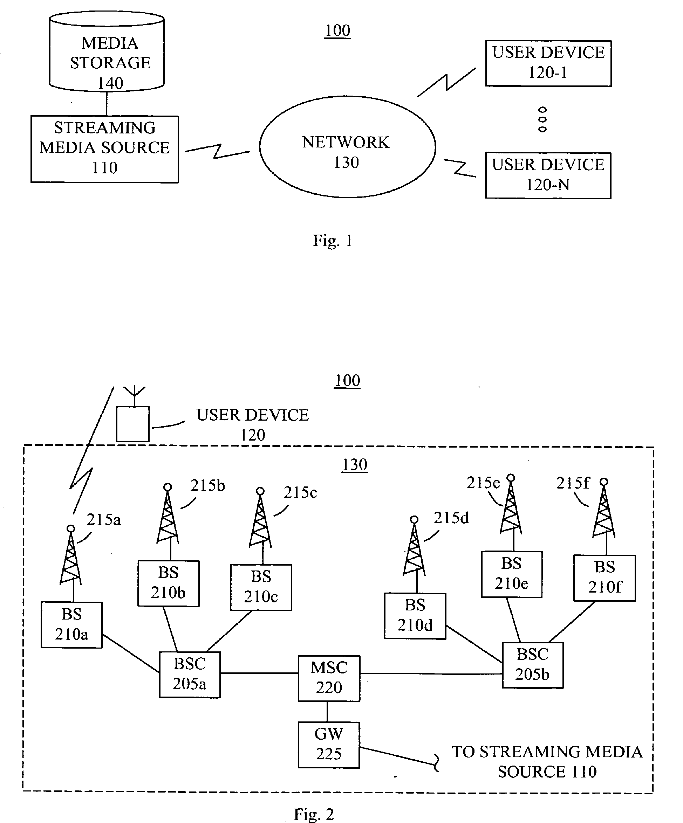

Some general aspects related to the invention will now be described with reference to Figs 1 and 2.

Fig.1 illustrates an exemplary system 100 in which aspects of the invention may be implemented. System 100 may include a streaming media source 110 and one or more user devices 120-1 through 120-N, individually referred to herein as "user device 120", connected to streaming media source 110 via a network 130 using wireless or wired connection links. Network 130 may include one or more sub-networks of any type, including a local area network (LAN), a wide area network (WAN), a satellite network, a metropolitan area network (MAN), a telephone network, such as the Public Switched Telephone Network (PSTN) or a Public Land Mobile Network (PLMN), an intranet, the Internet, a memory device, or a combination of networks. The PLMN(s) may further include a packet-switched sub-network, such as, for example, General Packet Radio Service (GPRS), Cellular Digital Packet Data (CDPD), or Mobile IP sub-network.

User device 120 may include a personal computer, a telephone, a cellular radiotelephone, a Personal Communications System (PCS) terminal or the like. A PCS terminal may combine a cellular radiotelephone with data processing, facsimile and/or data communications capabilities. User device 120 may further include a personal digital assistant (PDA), a conventional laptop and/or palmtop receiver, or another appliance that includes a radiotelephone transceiver, or the like. A PDA may include a radiotelephone, a pager, Internet/intranet access, a web browser, an organizer, calendars and/or a global positioning system (GPS) receiver.

Streaming media source 110 may include a server entity that may transmit streaming media to user devices 120-1 through 120-N via network 130. Streaming media source 110 may connect to media storage 140. Media storage 140 may store media content that may be retrieved by media source 110 and transmitted to user devices 120-1 through 120-N as streaming media.

Fig. 2 illustrates one example of system 100 implemented using a cellular network. In system 100, as illustrated in Fig. 2, user device 120 may include a mobile station and network 130 may include a PLMN, e.g. a cellular telephone network. As shown, system 100 may include user device 120 connected to cellular network 130. Cellular network 130 may include one or more base station controllers (BSCs) 205a and 205b, multiple base stations (BSs) 210a 210f, multiple base station antenna arrays 215a - 215f, one or more mobile switching centers (MSCs), such as MSC 220, and one or more gateways (GWs), such as GW 225.

Cellular network 130 may consist of components conventionally used for transmitting data to and from user device 120 and streaming media source 110 (not shown). Such components may include base station antenna arrays 215a - 215f, which transmit and receive, via appropriate data channels, data from mobile stations within their vicinity. Base stations 210a 210f connect to their respective antenna arrays 215a 215f, and format the data transmitted to, or received from the antenna arrays 215a - 215f in accordance with conventional techniques, for communicating with BSCs 205a -- 205b or a mobile station, such as user device 120. Among other functions, BSCs 205a - 205b may route received data to either MSC 220 or a base station (e.g., BSs 210a-210c or 210d-210f). MSC 220 routes received data to BSC 205a or 205b. GW 225 may route data received from an external domain (not shown) to an appropriate MSC (such as MSC 220), or from an MSC to an appropriate external domain. Streaming media source 110 (not shown in Fig. 2) may connect to cellular network 130 via another network, e.g. the Internet, and GW 225.

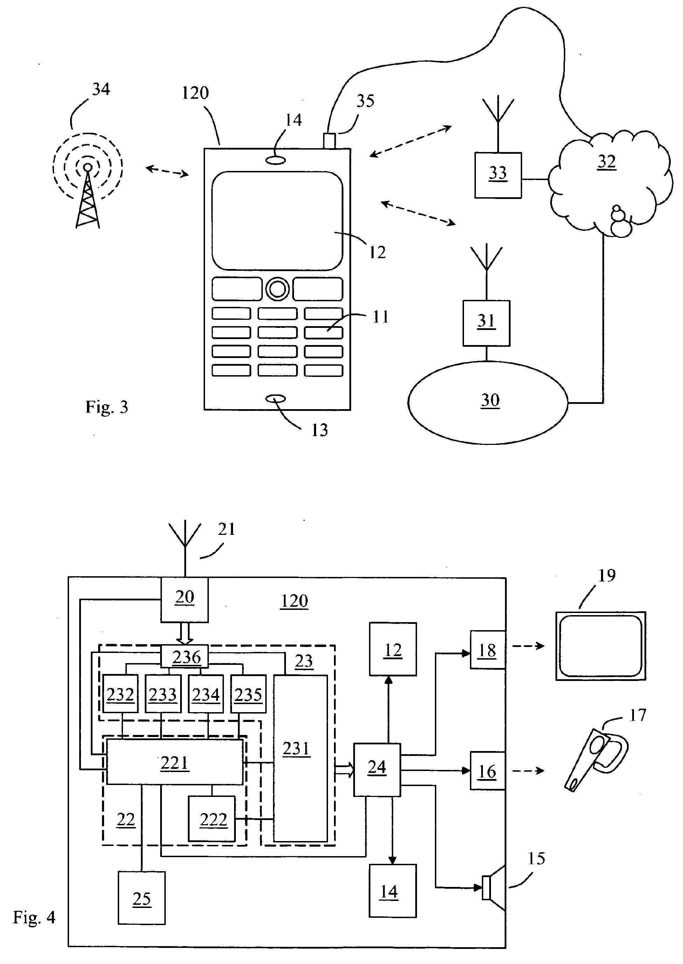

Fig. 3 illustrates the outer appearance of a user device in the shape of a mobile phone, in which an embodiment of invention may be implemented, whereas Fig. 4 schematically illustrates functional features of the user device by means of a block diagram. It should be noted that the elements indicated in Fig. 4 does not necessarily have to be physically divided in the manner shown, and that it is the functional relationship that is of primary interest. Furthermore, for the specific embodiment of a mobile phone, the outer appearance of the user device need not take the indicated shape of Fig. 3, instead the user device may e.g. be of a clamshell type, a jack knife type, or the like.

User device 120 is in one embodiment configured to receive streaming media from the Internet 32, corresponding to network 130, by wire connection 35. As an optional or additional feature, user device 120 is configured to operate in a radio communications network 30, for the purpose of receiving streaming media. The radio communications network 30 may e.g. be a 3G network, capable of providing streaming media from the Internet 32. For streaming audio, this is already available today through many mobile phone operators. For streaming video over the mobile network, one possible technology is Multimedia Broadcast and Multicast Service (MBMS) specified in 3GPP for use in WCDMA networks. Another alternative is Broadcast and Multicast Service (BCMCS) specified in 3GPP2 for CDMA2000. Both of these technologies are known and in many aspects similar to each other, and may both be used for providing streaming video to mobile terminals over a 3G mobile phone network. The terms broadcast and multicast are used alternatively, even though they do not mean exactly the same thing. For video streaming of television channels over a 3G network using e.g. MBMS, multicast will most likely be used, as it generally would be a subscription service. In addition, or as an optional feature, user device 120 may be provided with a radio signal receiver configured to operate in a IEEE 802.11 WLAN to receive streaming media including audio and video from a WLAN transmitter, or access point, 33 connected to the Internet 32. As yet another option, or additional feature, user device 120 may include a receiver for receiving broadcast or multicast media signals from a broadcast station 34, such as a radio station or a television station. For traditional radio transmissions, headset cords have been used as antennas for receiving FM radio. For digital transmissions of video, DVB-h (Digital Video Broadcasting - handheld) is a technology based on DVB, which has been adopted by ETSI as a standard specification for bringing broadcast services to handheld devices, is at least partly described in ETSI EN 302 304. DVB-h is basically a mobile version of the digital technology used in digital television networks. DMB (Digital Multimedia Broadcasting) is another digital transmission system for sending data, radio and TV to mobile devices such as mobile phones, whithout making use of the mobile phone network. It can operate via satellite (S-DMB) or terrestrial (T-DMB) transmission. DMB is based on the Eureka 147 DAB standard and has some similarities with DVB-h.

In summary, there are a number of different ways of receiving digital media, both audio and video, which may be used in user device 120. The actual technology or bearer used is not of primary importance to the invention, though, and only one single streaming media data receiver 20 is therefore depicted in Fig. 4, even though there may be more than one type of receiver. Receiver 20 may also, in various embodiments, act as a transmitter, and may therefore also be referred to as a transceiver 20. Alternatively, a separate transmitter (not shown) may be employed for the purpose of signal transmission. The user device 120 preferably includes a user interface comprising an input part, preferably including a set of keys 11, and additionally or optionally a touch-sensitive display. An output part of the user interface may include a display 12 for presenting information to a user. For the purpose of conducting speech communication, user device 120 further preferably includes a microphone 13 and a speaker 14. Besides speaker 14, an additional speaker 15 may be employed inter alia for the purpose of providing alert signals to a terminal user, and as a loudspeaker.

Fig. 4 illustrates the user device 120 in the form of a block diagram. In an embodiment where user device 120 is configured to act as a mobile phone, its actual function related to mobile telephony is not crucial to the invention, and will therefore not be described in detail. Receiver 20 is included for reception of streaming media data from on or more streaming media sources 110. Receiver 20 may include a socket for wire-connection 35 to a communications network. In the illustrated embodiment, though, an antenna 21 is connected to receiver 20 for input of streaming media data by radio signals. Receiver, or transceiver, 20 may include transceiver circuitry well known to one skilled in the art for receiving and optionally transmitting symbol sequences in a network, such as network 30, via antenna 21. Receiver 20 may for example include a conventional RAKE receiver, and may further include mechanisms for estimating the signal-to-interference ratio (SIR) of received symbol sequences.

The user device 120 is configured to receive streaming media data, and to convert that data into a user-perceivable signal, such as sound or images. For this purpose, one embodiment of the user device preferably includes a processing unit 22, which in a preferred embodiment represents a microprocessor system including associated memory space, operation software, and application software, and is configured to control the processes carried out in the user device 120. Processing unit 22 is, inter alia, configured to the control buffering according to the invention, as will described in more detail. User device 120 further includes a buffer unit 23 including two or more buffers configured to be filled with input streaming media data under control of processing unit 22, and to be drained of streaming media data for playback. Buffer unit 23 is therefore connected to a media player 24, configured to convert media data into media signals adapted for output through a media output device. For audio media content, media player 24 may therefore be connected to speaker 14, loudspeaker 15, and/or to a connector 16, where connector 16 is communicatively connectable to an external headset 17 or an external speaker (not shown). Such a headset 17 or speaker may be connectable by means of Bluetooth® or the like to a radio signal transceiver of connector 16. Alternatively, or additionally, connector 16 may include a socket for wire-bound connection to the external headset 17 or speaker. For video content, media player 24 may be connected to display 12 of the user interface, or to a connector 18 for connection to an external display 19. Connector 18 may also provide connection for audio associated with the video content, to be played back via a speaker in external display 19. The media output device of user device 120 may therefore be speaker 14 or 15, display 12, or connector 16 or 18. As a power supply, user device 120 preferably further includes a battery (not shown), and/or a connector for a mains outlet.

The block diagram of Fig. 4 further discloses an embodiment configured to carry out adaptive buffering consistent with principles of the invention. In accordance with the invention, the user device 120 comprises a first, or main, buffer 231, and at least one additional buffer. In the shown embodiment, there are three additional buffers 232, 233, 234, in the buffer unit 23. A buffer controller 221 of the processing unit 22 is configured to control the buffering process. Preferably, a buffer analyzer 222 is also included, configured to analyze the content of media data in the first buffer 231. First buffer 231 is configured to receive and store received streaming media data from receiver 20, where buffer controller 221 preferably controls the sequential storage of streaming media data in first buffer 231, and retrieval of the data from first buffer 231 for playback by media player 24. First buffer 231 is configured to be used for buffering of main content. In this context, main content typically refers to the content the user wants see or hear, such as an audio show, a movie, a television show, or similar. The additional buffer or buffers 232, 233, 234, 235 are configured to receive and store media data representing additional content, which typically is different from the main content. In a preferred embodiment, additional buffers 232-235 are also configured to receive and store received streaming media data from receiver 20, under control of buffer controller 221. However, it should be understood that the media data representing additional content may be stored in buffers 232-235 by other ways than reception of streaming media data from receiver 20. Another possible solution is to have downloaded media files in the additional buffers 232-235. Additional buffers 232-235 need in one embodiment not be as large as first buffer 231, and are therefore depicted as being substantially smaller. However, in an alternative embodiment, first buffer 231 and additional buffers 232-235 are of similar size or even identical. It should also be noted that the specific number of five additional buffers 232-235 in Fig. 4 is merely an example usable for describing the features of the invention. In various embodiments, buffer unit 23 may comprise any number of additional buffers, but at least one.

In accordance with aspects of the invention, the content stored in the at least one additional buffer 232-235 is provided to the media player when the first buffer 231 needs to be re-filled, and playback of the content of the first buffer 231 therefore is halted. When a user want to take part of the first, or main, content stored in first buffer 231, buffer controller 221 is triggered to extract media data from first buffer 231 and provide the extracted media data to media player 24, which plays the streaming media data to the user via the dedicated output device. For example, media player 24 may decode audio data from first buffer 231 before using speaker 15 to convert the decoded data from an electrical signal to an auditory output signal. As another example, media player 24 may decode video data from first buffer 231 before using display 12 to convert the video data to a visual representation.

During operation of user device 120 to receive and present streaming media of a main content, media data is sequentially stored in first buffer 231, and extracted from first buffer 231 to media player 24. Dependent on inter alia the bit rate of the media data and the bandwidth of the communication link over which streaming media is transported to receiver 20, first buffer 231 may be depleted faster than it is re-filled. When this is the case, first buffer 231 will finally be completely drained unless playback of the content from first buffer 231 is halted, so that first buffer 231 is re-filled only. In one embodiment, re-filling only of first buffer 231 is performed once first buffer 231 is completely emptied. In another embodiment, re-filling only is performed when the first buffer 231 has been emptied to a predetermined level. That level may be a certain percentage of the total capacity of first buffer 231, such as 5%, 10 %, 15%, 20%, 25%, or some other percentage level.

In another embodiment, an adaptive approach is used for re-filling first buffer 231. In this embodiment, user device 120 includes a buffer analyzer 222, configured to analyze the data stored in first buffer 231 to identify specific periods in the streaming media where it is suitable to halt playback of the content, preferably corresponding to "inactive" periods. Such inactive periods may include, for example, periods in which audio data is silent, e.g. a natural pause in speech, or periods in which video data is "still", e.g. little or no change in the video frame by frame for a number of frames, or the presence of a freeze frame representing e.g. a camera change or a scene change. As an alternative, or additional, solution the buffer analyzer 222 may be configured to analyze remaining media data in first buffer 231 to locate a halt flag, stored in the media data. Such a halt flag may be inserted by the producer of the main content, or by a content provider.

Buffer analyzer 222 may be configured to continuously analyze the data presently stored in first buffer 231. Alternatively, buffer analyzer 222 is triggered to analyze the remaining data in the first buffer 231 when the first buffer 231 has been emptied to a predetermined level, such as to a certain percentage of the total capacity of first buffer 231. As an example, buffer controller 221 may be configured to trigger buffer analyzer 222 to analyze the remaining data in first buffer 231 when the first buffer has been emptied to 20% of its total capacity. When first buffer 231 then subsequently has been depleted to the point where media data representing the inactive period or halt flag, is to be extracted, or has just been extracted, buffer controller 221 controls media player 24 to halt playback of the first content, while receiver 20 still passes media data to first buffer 231 to re-fill it.

When playback of media data content from first buffer 231 is halted, buffer controller 221 is configured to instead extract media data from a second buffer to media player 24. In case there is only one additional buffer 232, that additional buffer 232 represents the second buffer. In an alternative embodiment, in which there are a plurality of additional buffers 232, 233, 234, 235, one of those additional buffers will be selected as the second buffer, or one at a time will de selected as the second buffer. While the content of the second buffer is played back using media player 24, first buffer is re-filled with media data representing the first content. It should be noted, that in this context re-filled need not mean completely re-filled. When a certain criteria has been met, buffer controller is configured to switch back to extracting media data from first buffer 231, to resume playback of the first content. This criteria may include that buffer analyzer determines that first buffer 231 has been re-filled to at least a predetermined degree. An alternative, or additional, criteria to be met may be that the second content played back while re-filling first buffer 231 has reached an end point. That end point may be an identified end point location in the media data of the second buffer, or it may simply be when the second buffer has been emptied. By means of any of these embodiments, any user taking part of the content played by user device 120 will be provided with additional content while the first buffer is re-filled, which means that there will be fewer pauses in the played content. In a preferred embodiment, playback of the first content is halted at a located inactive period, as outlined above. This provides the additional benefit that the additional content as inserted from the second buffer will be perceived as less intrusive in the first, or main, content.

In one embodiment, the additional content stored in the additional buffer(s) 232, 233, 234, 235 represent commercial ads, preferably of the same media type, i.e. audio and/or video, as the main content stored in first buffer 231. When playback of the main content is halted, the commercial ad is instead played back for a short period of time. The playback of the commercial ad may be halted when first buffer 231 has been re-filled to at least a predetermined level, and/or after the commercial ad has been played to its end. Preferably, the or each commercial ad stored in the additional buffer(s) 232, 233, 234, 235 is/are quite short, in terms of playback time, such as between 2 and 10 seconds, which in many applications will be sufficient to re-fill the first buffer 231 adequately.

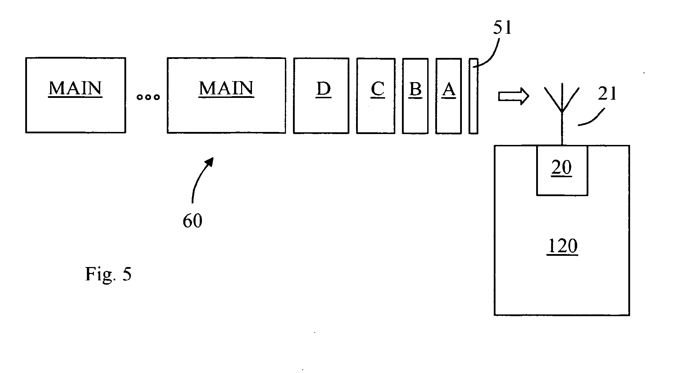

Fig. 5 illustrates how streaming media may be provided to receiver 20 of user device 120 by means of a data stream, in an embodiment of the invention. In this embodiment, media data to be stored in first buffer 231 as well as media data to be stored in additional buffers 232, 233, 234, 235, are consecutively received in the same data stream 50. Preferably, stream 50 includes a header 51, which describes the content of the data stream 50, and the header 51 is preferably transmitted first. In one embodiment, header 51 includes information on how many sets of content will be provided in the stream, in this case four. Header 51 may also include information on the size of the media data for each content provided in the stream, or at least for every content but the last, main, content. Optionally, header 51 may also include information on playback time for different sets of included content. Header 51 may also include an identification of flags or other means provided in the data stream 50, which identify the beginning and/or end of media data for each separate content. Preferably, buffer controller 221 is configured to scan the received media stream, and particularly to read the header 51. By interpreting the information contained in header 51, and potentially storing data containing that information in a memory 25, buffer controller 221 is configured to relay the media data received for different sets of content to different buffers in the buffer unit 23.

In the illustrated embodiment of Fig. 5, the media stream 50 includes a header 51, followed by media data for four small sets of content A, B, C, and D. After these smaller sets of content, the main content is provided. User device 120, which receives data stream 50, may be configured in accordance with Fig. 4. By reading the received header 51, buffer controller 221 determines that the data stream comprises media data representing four different sets of content A, B, C, D, and MAIN. In one embodiment, buffer unit 23 may include a pre-buffer 236 between the receiver 20 and buffers 231-235, in which pre-buffer 236 the header and/or the received media data is read to determine into which one of buffers 231-235 the received media data is to be stored. The identity of the main content may be known in advance to some extent, if it has been requested by the user of user device 120, whereas the smaller sets of content A, B, C, and D typically are not selected by the user. On the contrary, the additional sets of content A, B, C, D, need not be related to the main content at all. In a preferred embodiment, the additional sets of content represent different commercial ads, either in audio or video, or both. How these additional sets of content will be used is to some extent dependent on the bandwidth of the communication link over which data stream 50 is transmitted, and how erratic that link is. However, header 51 may also include information on a priority order for how to present additional content in the data stream 50, which priority order may be a rule which the buffer controller 221 must follow, or just a guide. Header 51 may also include information on a communication address, such as an IP address, an SMS address, an email address or similar, to which user device 120 is requested to report which sets of additional content have been played back. Alternatively, the communication link over which media data is streamed is a two way link, and the header then only includes a prompt to the user device 120 to reply over that link when the streaming data has been played back. Any information contained in header 51, which is important or useful for the processing of the received data stream 50, may be stored in memory 25 by buffer controller 221.

The following describes one example of how processing of streaming media may be achieved according to an embodiment of the invention:
1) A service provider having a streaming media source 110 creates a data stream 50 including main content and additional content. This step may be preceded by a user of user device 120 selecting the main, or first, content to play. In this embodiment, the additional content of the data stream includes four different and separate commercials A, B, C, and D. In this example the main content is a sitcom episode, comprising audio and video data. Typically, the additional sets of content, i.e. the commercials, therefore also include video content, but they may merely include audio content. In one example the playback time of the different commercials vary, where A has a playback time of 3 seconds, B has a playback time of 3 seconds, C has a playback time of 5 seconds, and D has a playback time of 8 seconds. The service provider also streams settings to be used by the receiving user device 120, preferably in a header part 51 of the stream 50.
2) The service provider first streams the media data of the separate content A-D in the stream 50, preferably preceded by header 51, and then starts streaming the comic episode, i.e. the main content, over the communication link
3) Streaming media of data stream 50 is received in user device 120, and buffer controller 221 stores the received media in different buffers 231-235 of buffer unit 23. In this embodiment, the number of ads receiver matches exactly with the number of additional buffers in buffer unit 23. Should that not be the case, additional rules would have to be applied. Should there be more additional sets of content provided in stream 50 than the number of additional buffers, the additional content to store in those additional buffers may be determined by a priority order given in header 51. Alternatively, the additional sets of content are stored sequentially, such that the first number of additional sets of content matching the number of additional buffers are stored therein, while any further sets of additional content in stream 50 are neglected. Preferably, the settings streamed in stream 50, such as in header 51, are analyzed by buffer controller 221 in a pre-buffer 236, from which the received media data is passed to the different buffers 231-235. Since the media data of the additional content is streamed first, and therefore also received first, the media data representing that additional content is first passed to respective separate buffers, such that for instance content A is stored in buffer 232, content B is stored in buffer 233, content C is stored in buffer 234, and content D is stored in buffer 235. When the media data of the main content is finally received, it is stored in first buffer 231.
4) Media data is then extracted from first buffer 231 and passed to media player 24, in order to begin playback of the sitcom. Extraction of data from first buffer 231 may, theoretically, begin as soon as there is any media data stored in first buffer 231. In a preferred embodiment, though, extraction of data does not begin until first buffer 231 is filled to an upper threshold, such as e.g. 80% of its total capacity.
5) After a while of playback of the main content, the first buffer 231 has been depleted to an extent where it is suitable to re-fill the first buffer before any more media data can be extracted. As previously mentioned, this may be when first buffer 231 is completely empty. However, in a preferred embodiment a suitable place to halt playback in the main content is defined either by a halt flag or by an inactive period in the main content. In one of those latter embodiments, buffer analyzer 222 is triggered to start looking for such a suitable place to halt when the first buffer reaches a lower threshold, such as e.g. 20% of its total capacity. In one embodiment, buffer controller 221 also calculates an estimate of expected length in time of the necessary re-filling of first buffer 231 when the playing of the main content halts. This may be based on an estimation of average network bandwidth during a suitable time-period before the halt, and an estimation of the average bit rate of the main content during the same time-period. This may provide a measure of the time needed to re-fill the first buffer e.g. to the upper threshold.
6) The media player 24 halts playback of content from the first buffer 231 when first buffer 231 has been depleted to a detected suitable place to halt, whereby first buffer 231 is only re-filled with media data for the main content. At this point in time, playback of additional content is commenced. In one embodiment, the different sets of additional content are played sequentially as received and stored in the additional buffers 232-235. In another embodiment, they are played in an order as determined by information in the header 51 of the received stream 50. In another embodiment, they are played in an order determined by their respective size, in terms of playback time, correlated with the estimated required length in time to re-fill the first buffer 231. In one embodiment, as here disclosed, a combination of these selection rules apply. In that embodiment, it has been estimated that it 2.5 seconds are required for adequate re-filling of first buffer 231. Buffer controller 221 therefore selects the first additional content having a playback time of at least 2.5 seconds as the second content, in this case commercial A. Media data from additional buffer 232 are thereby extracted to media player 24, whereby commercial A is played, preferably on the same output device as the main content was played on, e.g. display 12. It should be stressed that the estimate of required time, as well as the selection of which additional content to play when the main content is halted, are preferably performed before the main content is actually halted, enabling a fast and smooth switch from the first buffer 231 to the (selected) second buffer 232.
7) Playback of the first content is then resumed when certain criteria are met.
   Preferably, the additional content selected matches the estimated required re-filling time, and the switch back to play the main content from first buffer 231 is not performed until the selected content, i.e. commercial A, has been played to an end point. In this context, an end point may mean the final end of content A, or an intermediate end point within that additional content, separating different content portions of commercial A, e.g. by flags in the media data. Alternatively, playback of content A is terminated when it has been determined that first buffer 231 has been adequately re-filled, e.g. to a predetermined threshold level, without considering whether or not content A is interrupted. When the buffer is filled and commercial A is played, it starts playing the sitcom. Should it be possible to play the remainder of the main content without having to halt and re-fill, the method ends when the last of media data of the main content has been extracted and played. However, for a longer show such as a sitcom, that would not necessarily be the case, and more halts would therefore be required. At those halts, different rules of selecting which additional content to play may be employed. The following steps 8-10 outline one illustrative example of how one embodiment could be realized.
8) Once playback of the main content has been resumed, the process will eventually come to step 5 again. Also this time, the estimated re-filling time required is 3 seconds in step 6. However, since commercial A was played the last time, commercial B is played instead. Step 7 is then repeated in order to resume playback of the main content.
9) When the process comes back to step 5 again. This time the estimated time for buffering is 4 seconds. The buffer controller 221 could then select commercial C, but instead it selects commercial D because a priority order provided in header 52 of the received stream 50 specifies this order of choice. The background may e.g. be that the service provider gets better paid by the company behind commercial D. When the entire content of commercial D has been played back, Step 7 is repeated in order to resume playback of the main content.
10) The sitcom episode provided in the main content is finished. In one embodiment, the user device 120 reports to the content provider, before ending the session, that it has played commercials A, B and D once, information which the buffer controller preferably has stored in memory 25. Alternatively, this information is provided to the content provider at a later stage, and possibly using another communication medium. The transmission of data related to which content has been played may e.g. at certain intervals for regular subscribers to a media service.

The foregoing description of implementations consistent with principles of the invention provides illustration and description, but is not intended to be exhaustive or to limit the invention to the precise form disclosed. At least some of the merits of the invention include the effect that, instead of freezing picture and sound when buffering, the users get something to watch and/or listen to. Service providers and media owners are furthermore provided with a potential revenue source linked to the concept of providing additional content including commercial advertisements, without actually extending the playback time of the main content into which it is inserted. Using such a service for streaming media, where additional content is provided when the image or audio otherwise would freeze, could also form a basis for subsidized media services, provided that a user accepts to be presented with advertisements when the user device is buffering media data.

## Claims

1. A method for processing streaming media in a user device, comprising the steps of:
receiving streaming media data;
storing received data representing first content in a first buffer;
extracting portions of the received data from the first buffer to begin playback of the first content;
halting playback of the first content;
determining a suitable re-filling time period for the first buffer by determining network bandwidth in a communication link over which the streaming media data is received, determining bit rate for the first content and determining the time period required to reach a predetermined level in the first buffer based on the determined bandwidth and the bit rate;
extracting portions of media data representing second content from a second buffer to begin playback of the second content while re-filling the first buffer;
selecting the second content from a plurality of additional sets of content, for which sets of content media data is stored in separate buffers, based on the selected second content having a playback time exceeding the determined re-filling time period; and
resuming playback of the first content.

2. The method of claim 1, comprising the steps of
analyzing remaining media data in the first buffer during playback of the first content, to identify a location to halt playback;
halting playback of the first content when the first buffer reaches the identified location in the first buffer.

3. The method of claim 2, wherein the step of analyzing remaining media data in the first buffer is carried out when the first buffer is emptied to a predetermined level.

4. The method of claim 2, wherein the step of analyzing remaining media data in the first buffer comprises the step of identifying a halt flag or a location in the first buffer that stores an inactive period.

5. The method of claim 1, wherein the step of receiving streaming media data comprises the steps of:
receiving media data representing the first content; and
receiving media data representing one or more additional sets of content, wherein the method further comprises the step of:
storing the received data of the additional sets of content in separate buffers.

6. The method of claim 5, wherein the second content is selected based on which of said additional sets of content have been previously played while re-filling the first buffer.

7. The method of claim 5, comprising the steps of:
storing information on which of the additional sets of content have been played during re-filling of the first buffer;
transmitting a report of the stored information to a service provider.

8. The method of claim 1, wherein the step of resuming playback of the first content is carried out when the first buffer has been re-filled to a predetermined level.

9. A user device for playback of streaming media, comprising:
a signal receiver for receiving streaming media data;
a first buffer for storing received streaming media data representing first content;
a second buffer for storing media data representing second content;
a buffer controller configured to
extract portions of data from the first buffer to begin media playback;
halt playback of the first content;
determine a suitable re-filling time period for the first buffer, based on an estimation of average network bandwidth during a suitable time-period before the halt, and an estimation of the average bit rate of the main content during the same time-period;
extract portions of media data from the second buffer to begin media playback of the second content while re-filling the first buffer;
select the second content from one of the plurality of separate buffers, based on the selected second content having a playback time exceeding the determined re-filling time period and
resume playback of the first content.

10. The user device of claim 9, comprising:
a media player connected to the buffer, configured to provide media playback of extracted media data;
an output device connected to the media player, configured to provide user-perceivable media output.

11. The user device of claim 9, comprising:
a buffer analyzer, configured to analyze remaining media data in the first buffer, during playback of media from the first buffer, to identify a location to halt playback; wherein the buffer controller is configured to halt playback of content from the first buffer when the first buffer reaches the identified location.

12. The user device of claim 11, wherein the buffer controller is configured to analyze remaining media data in the first buffer when the first buffer is emptied to a predetermined level.

13. The user device of claim 11, wherein the buffer controller is configured to analyze remaining media data in the first buffer by identifying a halt flag or a location in the first buffer that stores an inactive period.

14. The user device of claim 9, comprising:
a plurality of separate buffers for storing media data representing additional sets of content, wherein the buffer controller is configured to select the second content from one of the plurality of buffers.

15. The user device of claim 9, wherein the buffer controller is configured to select the second content from one of the plurality of separate buffers, based on which of said additional sets of content have been previously played while re-filling the first buffer.

16. The user device of claim 14, comprising:
a signal transmitter;
a data memory;
a data recorder configured to store information in the data memory on which of the additional sets of content have been played during re-filling of the first buffer, and to transmit a report of the stored information to a content provider.

17. The user device of claim 9, wherein the buffer controller is configured to resume playback of content from the first buffer when the first buffer has been re-filled to a predetermined level.

## Patentansprüche

1. Verfahren zum Verarbeiten von Streaming-Medien in einer Benutzereinrichtung, welches die Schritte umfasst:
Empfangen von Streaming-Mediendaten;
Speichern von empfangenen Daten, welche einen ersten Inhalt repräsentieren, in einem ersten Puffer;
Extrahieren von Teilen der empfangenen Daten aus dem ersten Puffer, um die Wiedergabe des ersten Inhalts zu beginnen;
Anhalten der Wiedergabe des ersten Inhalts;
Bestimmen einer passenden Auffüllzeitperiode für den ersten Puffer durch Bestimmen von Netzwerkbandbreite in einer Kommunikationsverbindung, über welche die Streaming-Mediendaten empfangen werden, Bestimmen einer Bitrate für den ersten Inhalt und Bestimmen der Zeitperiode, welche benötigt wird, um einen vorbestimmten Füllstand in dem ersten Puffer zu erreichen, basierend auf der bestimmten Bandbreite und der Bitrate;
Extrahieren von Teilen von Mediendaten, welche einen zweiten Inhalt repräsentieren, aus einem zweiten Puffer, um die Wiedergabe des zweiten Inhalts zu beginnen, während der erste Puffer aufgefüllt wird;
Wählen des zweiten Inhalts aus einer Vielzahl von zusätzlichen Gruppen von Inhalt, für welche Gruppen von Inhalt Mediendaten in getrennten Puffern gespeichert sind, basierend auf dem gewählten zweiten Inhalt mit einer Wiedergabezeit, welche die bestimmte Auffüllzeitperiode überschreitet; und
Wiederaufnahme der Wiedergabe des ersten Inhalts.

2. Verfahren nach Anspruch 1, welches die Schritte umfasst:
Analysieren der übrigen Mediendaten in dem ersten Puffer während der erste Inhalt wiedergegeben wird, um eine Stelle für das Anhalten der Wiedergabe zu identifizieren;
Anhalten der Wiedergabe des ersten Inhalts, wenn der erste Puffer die identifizierte Stelle in dem ersten Puffer erreicht.

3. Verfahren nach Anspruch 2, wobei der Schritt des Analysierens von übrigen Mediendaten in dem ersten Puffer ausgeführt wird, wenn der erste Puffer zu einem vorbestimmten Füllstand geleert wird.

4. Verfahren nach Anspruch 2, wobei der Schritt des Analysierens von übrigen Mediendaten in dem ersten Puffer den Schritt des Identifizierens einer Anhaltemarkierung oder einer Stelle in dem ersten Puffer umfasst, welche eine inaktive Periode speichert.

5. Verfahren nach Anspruch 1, wobei der Schritt des Empfangens von Streaming-Mediendaten die Schritte umfasst:
Empfangen von Mediendaten, welche den ersten Inhalt repräsentieren; und
Empfangen von Mediendaten, welche eine oder mehr zusätzliche Gruppen von Inhalt repräsentieren, wobei das Verfahren ferner den Schritt umfasst:
Speichern der empfangenen Daten von den zusätzlichen Gruppen von Inhalt in getrennten Puffern.

6. Verfahren nach Anspruch 5, wobei der zweite Inhalt gewählt wird, basierend darauf, welche der zusätzlichen Gruppen von Inhalt vorher während des Auffüllens des ersten Puffers wiedergegeben wurden.

7. Verfahren nach Anspruch 5, welches die Schritte umfasst:
Speichern von Information darüber, welche der zusätzlichen Gruppen von Inhalt während des Auffüllens des ersten Puffers wiedergegeben wurden;
Senden eines Berichts der gespeicherten Information an einen Service-Provider.

8. Verfahren nach Anspruch 1, wobei der Schritt der Wiederaufnahme der Wiedergabe des ersten Inhalts ausgeführt wird, wenn der ersten Puffer auf einen vorbestimmten Füllstand aufgefüllt wurde.

9. Benutzereinrichtung zur Wiedergabe von Streaming-Medien, welche umfasst:
einen Signalempfänger zum Empfangen von Streaming-Mediendaten;
einen ersten Puffer zum Speichern von empfangenen Streaming-Mediendaten, welche einen ersten Inhalt repräsentieren;
einen zweiten Puffer zum Speichern von Mediendaten, welche einen zweiten Inhalt repräsentieren;
eine Puffersteuerung, welche konfiguriert ist,
Teile von Daten aus dem ersten Puffer zu extrahieren, um die Wiedergabe von Medien zu beginnen;
die Wiedergabe des ersten Inhalts anzuhalten;
eine passenden Auffüllzeitperiode für den ersten Puffer, basierend auf einer Schätzung von durchschnittlicher Netzwerkbandbreite während einer passenden Zeitperiode vor dem Anhalten, und eine Schätzung der durchschnittlichen Bitrate des Hauptinhalts während der gleichen Zeitperiode zu bestimmen;
Teile von Mediendaten aus dem zweiten Puffer zu extrahieren, um die Wiedergabe von Medien des zweiten Inhalts zu beginnen, während des Auffüllens des ersten Puffers;
den zweiten Inhalt aus einem von der Vielzahl von getrennten Puffern auszuwählen, basierend auf dem gewählten zweiten Inhalt mit einer Wiedergabezeit, welche die bestimmte Auffüllzeitperiode überschreitet und
die Wiedergabe des ersten Inhalts wiederaufzunehmen.

10. Benutzereinrichtung nach Anspruch 9, welche umfasst:
einen Media-Player, welcher mit dem Puffer verbunden ist, welcher konfiguriert ist, die Wiedergabe von Medien von extrahierten Mediendaten bereitzustellen;
eine Ausgabeeinrichtung, welche mit dem Media-Player verbunden ist, welche konfiguriert ist, eine von einem Benutzer wahrnehmbare Medienausgabe bereitzustellen.

11. Benutzereinrichtung nach Anspruch 9, welche umfasst:
einen Puffer-Analysator, welcher eingerichtet ist, übrige Mediendaten in dem ersten Puffer zu analysieren, während der Wiedergabe von Medien aus dem ersten Puffer, um eine Stelle, um die Wiedergabe anzuhalten, zu identifizieren; wobei die Puffersteuerung konfiguriert ist, die Wiedergabe von Inhalt aus dem ersten Puffer anzuhalten, wenn der erste Puffer die identifizierte Stelle erreicht.

12. Benutzereinrichtung nach Anspruch 11, wobei die Puffersteuerung konfiguriert ist, übrige Mediendaten im ersten Puffer zu analysieren, wenn der erste Puffer zu einem vorbestimmten Füllstand geleert wird.

13. Benutzereinrichtung nach Anspruch 11, wobei die Puffersteuerung konfiguriert ist, übrige Mediendaten in dem ersten Puffer zu analysieren, durch Identifizieren einer Anhaltemarkierung oder einer Stelle in dem ersten Puffer, welche eine inaktive Periode speichert.

14. Benutzereinrichtung nach Anspruch 9, welche umfasst:
eine Vielzahl von getrennten Puffern zum Speichern von Mediendaten, welche zusätzliche Gruppen von Inhalt repräsentieren, wobei die Puffersteuerung konfiguriert ist, den zweiten Inhalt aus einem der Vielzahl von Puffern zu wählen.

15. Benutzereinrichtung nach Anspruch 9, wobei die Puffersteuerung konfiguriert ist, den zweiten Inhalt aus einem der Vielzahl von getrennten Puffern zu wählen, basierend darauf, welche der zusätzlichen Gruppen von Inhalt vorher während des Auffüllens des ersten Puffers wiedergegeben wurden.

16. Benutzereinrichtung nach Anspruch 14, welche umfasst:
einen Signalsender;
einen Datenspeicher;
einen Datenaufnehmer, welcher konfiguriert ist, Information in dem Datenspeicher darüber zu speichern, welche von den zusätzlichen Gruppen von Inhalt während des Auffüllen des ersten Puffers wiedergegeben wurden, und ein Bericht der gespeicherten Information an einen Inhalts-Provider zu senden.

17. Benutzereinrichtung nach Anspruch 9, wobei die Puffersteuerung konfiguriert ist, die Wiedergabe von Inhalt aus dem ersten Puffer wieder aufzunehmen, wenn der ersten Puffer zu einem vorbestimmten Füllstand aufgefüllt wurde.

## Revendications

1. Procédé destiné à traiter un flux multimédia dans un dispositif utilisateur, comprenant les étapes consistant à :
recevoir des données de flux multimédia ;
stocker dans un premier tampon des données reçues représentant un premier contenu ;
extraire du premier tampon des parties des données reçues pour commencer la reproduction du premier contenu ;
arrêter la reproduction du premier contenu ;
déterminer une période de temps de réalimentation appropriée pour le premier tampon en déterminant la largeur de bande du réseau dans une liaison de communication par l'intermédiaire de laquelle sont reçues les données de flux multimédia, déterminer le débit binaire destiné au premier contenu et déterminer la période de temps requise pour atteindre un niveau prédéterminé dans le premier tampon sur la base de la largeur de bande déterminée et du débit binaire ;
extraire d'un second tampon des parties de données multimédia représentant un second contenu pour commencer la reproduction du second contenu pendant la réalimentation du premier tampon ;
sélectionner le second contenu dans une pluralité d'ensembles supplémentaires de contenus pour lesquels des ensembles de données multimédia de contenu sont stockées dans des tampons séparés, sur la base du fait que le second contenu sélectionné a un temps de reproduction dépassant la période de temps de réalimentation déterminée ; et
reprendre la reproduction du premier contenu.

2. Procédé selon la revendication 1, comprenant les étapes consistant à :
analyser des données multimédia restantes dans le premier tampon pendant la reproduction du premier contenu afin d'identifier un point d'arrêt de la reproduction ;
arrêter la reproduction du premier contenu lorsque le premier tampon atteint le point identifié dans le premier tampon.

3. Procédé selon la revendication 2, dans lequel l'étape d'analyse de données multimédia restantes dans le premier tampon est effectuée lorsque le premier tampon est vidé à un niveau prédéterminé.

4. Procédé selon la revendication 2, dans lequel l'étape d'analyse de données multimédia restantes dans le premier tampon comprend l'étape consistant à identifier un drapeau d'arrêt ou un point dans le premier tampon qui stocke une période inactive.

5. Procédé selon la revendication 1, dans lequel l'étape de réception de données de flux multimédia comprend les étapes consistant à :
recevoir des données multimédia représentant le premier contenu ; et
recevoir des données multimédia représentant un ou plusieurs ensembles supplémentaires de contenus, le procédé comprenant en outre l'étape consistant à :
stocker les données reçues d'ensembles supplémentaires de contenus dans des tampons séparés.

6. Procédé selon la revendication 5, dans lequel le second contenu est sélectionné sur la base de celui desdits ensembles supplémentaires de contenus qui ont déjà été reproduits pendant la réalimentation du premier tampon.

7. Procédé selon la revendication 5, comprenant les étapes consistant à :
stocker des informations indiquant lesquels des ensembles supplémentaires de contenus ont été reproduits pendant la réalimentation du premier tampon ;
transmettre un rapport des informations stockées à un fournisseur de service.

8. Procédé selon la revendication 1, dans lequel l'étape de reprise de la reproduction du premier contenu est effectuée lorsque le premier tampon a été réalimenté à un niveau prédéterminé.

9. Dispositif utilisateur destiné à reproduire des flux multimédia, comprenant :
un récepteur de signal destiné à recevoir des données de flux multimédia ;
un premier tampon destiné à stocker des données de flux multimédia reçues représentant un premier contenu ;
un second tampon destiné à stocker des données multimédia représentant un second contenu ;
un dispositif de commande de tampon configuré pour :
extraire des parties de données du premier tampon afin de commencer la reproduction des données multimédia ;
arrêter la reproduction du premier contenu ;
déterminer une période de temps de réalimentation appropriée pour le premier tampon sur la base d'une estimation de la largeur de bande moyenne du réseau pendant une période de temps appropriée avant l'arrêt, et d'une estimation du débit binaire moyen du contenu principal pendant la même période de temps ;
extraire des parties de données multimédia du second tampon pour commencer la reproduction de données multimédia du second contenu tout en réalimentant le premier tampon ;
sélectionner le second contenu parmi la pluralité de tampons séparés, sur la base du second contenu sélectionné ayant un temps de reproduction dépassant la période de temps de réalimentation déterminée, et
reprendre la reproduction du premier contenu.

10. Dispositif utilisateur selon la revendication 9, comprenant :
un lecteur multimédia connecté au tampon, configuré pour permettre une reproduction multimédia de données multimédia extraites ;
un dispositif de sortie connecté au lecteur multimédia, configuré pour fournir une sortie multimédia pouvant être perçue par l'utilisateur.

11. Dispositif utilisateur selon la revendication 9, comprenant :
un analyseur de tampon, configuré pour analyser des données multimédia restantes dans le premier tampon pendant la reproduction de données multimédia à partir du premier tampon, afin d'identifier un point d'arrêt de la reproduction ; dans lequel le dispositif de commande de tampon est configuré pour arrêter la reproduction du contenu provenant du premier tampon lorsque le premier tampon atteint le point identifié.

12. Dispositif utilisateur selon la revendication 11, dans lequel le dispositif de commande de tampon est configuré pour analyser des données multimédia restantes dans le premier tampon lorsque le premier tampon est vidé à un niveau prédéterminé.

13. Dispositif utilisateur selon la revendication 11, dans lequel le dispositif de commande de tampon est configuré pour analyser des données multimédia restantes dans le premier tampon en identifiant un drapeau d'arrêt ou un point dans le premier tampon qui stocke une période inactive.

14. Dispositif utilisateur selon la revendication 9, comprenant :
une pluralité de tampons séparés destinés à stocker des données multimédia représentant des ensembles supplémentaires de contenus, le dispositif de commande de tampon étant configuré pour sélectionner le second contenu dans l'un de la pluralité de tampons.

15. Dispositif utilisateur selon la revendication 9, dans lequel le dispositif de commande de tampon est configuré pour sélectionner le second contenu dans l'un de la pluralité de tampons séparés sur la base de ceux desdits ensembles supplémentaires de contenus qui ont été précédemment reproduits pendant la réalimentation du premier tampon.

16. Dispositif utilisateur selon la revendication 14, comprenant :
un émetteur de signal ;
une mémoire de données ;
un enregistreur de données configuré pour stocker des informations dans la mémoire de données en ce qui concerne ceux des ensembles supplémentaires de contenus qui ont été reproduits pendant la réalimentation du premier tampon, et pour transmettre un rapport des informations stockées à un fournisseur de contenu.

17. Dispositif utilisateur selon la revendication 9, dans lequel le dispositif de commande de tampon est configuré pour reprendre la reproduction du contenu à partir du premier tampon lorsque le premier tampon a été réalimenté à un niveau prédéterminé.
